# EUROPEAN PATENT APPLICATION

(11) **EP 3 587 009 A1**
(43) Date of publication of application: **01.01.2020**
(21) Application number: 18305836.1
(22) Date of filing: 29.06.2018
(51) Int. Cl.: B22F 9/24, G01J 3/44, G01N 21/552, G01N 21/65

(54) **PROCESS FOR MANUFACTURING GOLD NANOFLOWERS AND USES THEREOF**

(71) Applicant: Université de Tours, 37020 Tours Cedex 1 (FR)
(72) Inventor: CHOURPA, Igor, 37020 Tours Cedex 1 (FR); HERVE-AUBERT, Katel, 37320 Louans (FR)
(74) Representative: Icosa

(57) **Abstract**

The present invention relates to a process for manufacturing gold nanoparticles comprising the following steps:
a) preparing a solution by mixing at least one reducing agent, at least one base and at least one nanoparticle stabilizing agent in an aqueous solvent,
b) adding at least one gold precursor to the solution obtained at step (a), and
c) recovering gold nanoparticles,
wherein said gold nanoparticles are gold nanoflowers.

The present invention also relates to gold nanoparticles obtained or obtainable by the process of the invention, and the use of said gold nanoparticles.

## Description

### FIELD OF INVENTION

The present invention pertains to the field of materials. In particular, the invention relates to a process for manufacturing gold nanoflowers and uses thereof.

### BACKGROUND OF INVENTION

Gold nanoflowers have emerged during the past decade as novel plasmonic nanosystems absorbing light in the red-deep red range (600-900 nm). Indeed, the anisotropic structure of the gold nanoflowers allows unique optical properties.

Gold nanoflowers are interesting for many applications, in particular as agents for photoinduced heating and substrates for surface-enhanced Raman scattering (SERS) spectroscopy. Due to its high sensitivity, molecular specificity and selectivity, SERS spectroscopy is a rapidly developing analytical and bioanalytical technique. SERS excitation in the 630-850 nm region is favorable for bio-analytical SERS applications, because this wavelength range allows a compromise between minimal light interaction with biological tissues and the good performance of laser sources and CCD detectors.

The SERS effect is observed for organic molecules situated in the vicinity of a surface of a noble metal nanoparticle, which displays collective oscillations of surface electrons called plasmons. The SERS effect implies that the excitation wavelength coincides with the localized surface plasmon resonance (LSPR) band of the noble metal nanoparticle. Isotropic smooth gold nanoparticles have their LSPR band around 530 nm, thus their use for SERS with higher wavelength excitation sources is possible only in the case of nanoparticles aggregation, leading to poor colloidal stability. Anisotropic gold nanoflowers have been developed to solve this problem and allow aggregation-free LSPR absorption in the red-deep red range.

However, the methods used to synthetize gold nanoflowers are very complex, time consuming, and involve multiple reagents (organic solvents, surfactants, ions or seeds of other metals such as silver or iron oxide), multiple synthesis steps and purification steps.

For instance, Xie et al. discloses a process for manufacturing branched gold nanocrystals exhibiting a LSPR band position ranging from 500 to 700 nm. Said process comprises the following steps: preparing a solution by mixing HEPES and NaOH, resulting in a solution at pH 7.4; adding deionized water to the previously obtained solution; adding HAuCl₄; letting the solution rest for at least 30 minutes at room temperature without shaking; and recovering branched gold nanocrystals. However, the process disclosed in Xie et al. takes a long time, and results in a mixture of gold nanocrystals with different shapes: spheres, tripods, flowers.

Zhao et al. discloses a process for manufacturing gold nanoflowers exhibiting a LSPR band position ranging from 500 to 600 nm. Said process comprises the following steps: preparing a solution of gold seeds by adding sodium citrate to a boiling solution of HAuCl₄; preparing a solution A by mixing HAuCl₄ in aqueous solution with NaOH to adjust the pH value (4.2-11); preparing a solution B by mixing NH₂OH and the gold seeds; mixing solution A and solution B; recovering gold nanoflowers; washing said gold nanoflowers. However, the process disclosed in Zhao et al. comprises many steps including seeds preparation and washing steps, thus is a complex and long process. Also, said process does not result in gold nanoflowers having a LSPR band position above 600 nm.

Therefore, there is a real need for a simple and fast process for manufacturing gold nanoflowers with LSPR band tuned to desired wavelength range in the deep red and near infrared.

To that end, the present invention provides a process for manufacturing gold nanoflowers based on mild chemistry in aqueous medium at room temperature, and having one or more of the following advantages: said process is simple, fast, cheap; it allows high synthesis yield; it does not require many reagents; it does not comprise the synthesis of intermediate products having to be characterized before resuming synthesis of the nanoparticles. In addition, the composition of the final sample is simple, thus there is no need of washing steps and there is a possibility of further surface modification with desired organic species.

### SUMMARY

The present invention concerns a process for manufacturing gold nanoparticles comprising the following steps:
a) preparing a solution by mixing at least one reducing agent, at least one base and at least one nanoparticle stabilizing agent in an aqueous solvent,
b) adding at least one gold precursor to the solution obtained at step (a), and
c) recovering gold nanoparticles,
wherein said gold nanoparticles are gold nanoflowers.

According to one embodiment, the step (b) is carried out at room temperature.

According to one embodiment, the gold precursor is tetrachloroauric acid.

According to one embodiment, the reducing agent is hydroxylamine.

According to one embodiment, the base is sodium hydroxide.

According to one embodiment, the nanoparticle stabilizing agent is citrate salt, more preferably trisodium citrate.

According to one embodiment, the molar ratio reducing agent/base ranges from 0.1 to 1.

According to one embodiment, the gold nanoflowers have a localized surface plasmonic resonance band ranging from 560 to 900 nm.

According to one embodiment, the gold nanoflowers have an average size ranging from 50 to 120 nm.

The present invention also concerns gold nanoparticles obtained or obtainable by the process according to the invention, wherein said gold nanoparticles are gold nanoflowers.

According to one embodiment, the gold nanoparticles have a localized surface plasmonic resonance band ranging from 560 to 900 nm.

According to one embodiment, the gold nanoparticles have an average size ranging from 50 to 120 nm.

The present invention also concerns the use of gold nanoparticles according to the invention as substrates for surface-enhanced Raman scattering spectroscopy, applications using SERS effect, or SPR technique.

The present invention also concerns the use of gold nanoparticles according to the invention in optical spectroscopy, optical microscopy, optical diagnostic, biomedical diagnostic, or imaging microscopy.

The present invention also concerns the use of gold nanoparticles according to the invention in hyperthermia or photothermal applications.

### DEFINITIONS

In the present invention, the following terms have the following meanings:
- **"Aqueous medium"** is defined as a unique-phase wherein water is the main chemical species in terms of molar ratio and/or in terms of mass and/or in terms of volume in respect to the other chemical species contained in said aqueous medium.
- **"Colloidal"** refers to a substance in which particles are dispersed, suspended and do not settle or would take a very long time to settle appreciably, but are not soluble in said substance.
- **"Colloidal particles"** refers to particles that may be dispersed, suspended and which would not settle or would take a very long time to settle appreciably in another substance, typically in an aqueous or organic solvent, and which are not soluble in said substance. **"Colloidal particles"** does not refer to particles grown on substrate.
- **"Localized surface plasmonic resonance band",** or LSPR band, refers to the plasmonic resonance band, preferably detected as absorption band.
- **"Partially"** means incomplete. In the case of an organic coating on the nanoparticles, partially means that 5%, 10%, 15%, 20%, 25%, 30%, 35%, 40%, 45%, 50%, 55%, 60%, 65%, 70%, 75%, 80%, 85%, 90%, 95% of the surface of a nanoparticle is coated by an organic material.
- **"Polydisperse"** refers to particles of varied sizes, wherein the size difference is superior or equal to 20%.
- **"Polydispersity index"** refers to a measure of the heterogeneity of any compound.
- **"Statistical set"** refers to a collection of at least 2, 3, 4, 5, 6, 7, 8, 9, 10, 11, 12, 13, 14, 15, 16, 17, 18, 19, 20, 30, 40, 50, 60, 70, 80, 90, 100, 150, 200, 250, 300, 350, 400, 450, 500, 550, 600, 650, 700, 750, 800, 850, 900, 950, or 1000 objects obtained by the strict same process. Such statistical set of objects allows determining average characteristics of said objects, for example their average size, their average size distribution or the average distance between them.
- **"Surfactant-free"** refers to a particle that does not comprise any surfactant and was not synthesized by a method comprising the use of surfactants.

### DETAILED DESCRIPTION

The following detailed description will be better understood when read in conjunction with the drawings. For the purpose of illustrating, the process and/or the nanoparticles are shown in the preferred embodiments. It should be understood, however that the application is not limited to the precise arrangements, structures, features, embodiments, and aspect shown. The drawings are not drawn to scale and are not intended to limit the scope of the claims to the embodiments depicted. Accordingly, it should be understood that where features mentioned in the appended claims are followed by reference signs, such signs are included solely for the purpose of enhancing the intelligibility of the claims and are in no way limiting on the scope of the claims.

This invention relates to a process for manufacturing gold nanoparticles comprising the following steps:
a) preparing a solution by mixing at least one reducing agent, at least one base and at least one nanoparticle stabilizing agent in an aqueous solvent,
b) adding at least one gold precursor to the solution obtained at step (a), and
c) recovering gold nanoparticles,
wherein said gold nanoparticles are gold nanoflowers.

The process of the invention is simple, fast and easy to perform and allows to obtain gold nanoflowers.

The nanoflower shape, more precisely the presence of protrusions, also called petals, close to each other, allows to absorb light at much greater wavelengths than spherical gold nanoparticles, while allowing to maintain a relatively small size (50 to 100 nm average size seen in TEM).

The process of the invention comprises an almost instantaneous nucleation of seeds and very fast growth of nanoflowers. The rapid growth in presence of the nanoparticle stabilizing agent adsorbed on the gold surface may be the reason of the anisotropic nature of the gold nanoparticles in the absence of surfactants. Indeed, synthesis without any nanoparticle stabilizing agent leads to spherical colloids of reddish colors, i.e. with a LSPR band below 600 nm.

The nanoparticle stabilizing agent is in its anionic form in step (b), it is adsorbed on the gold surface and thus plays a role both in the gold nanoflowers growth and colloidal stability.

The base acts as a pH regulator. Indeed, pH plays a very important role in the synthesis of gold nanoparticles as it affects the reactivity of gold precursors and therefore, the kinetics of nanocrystal nucleation and growth. After the formation of gold nanoflowers, pH influences the presence of the negatively charged groups, such as for example citrate groups, on the gold surface and thus the colloidal stabilization by electrostatic repulsion of particles.

According to one embodiment, step (b) comprises a redox (reduction-oxidation) reaction.

According to one embodiment, the gold precursor is tetrachloroauric (III) acid (HAuCl₄).

According to one embodiment, the reducing agent is hydroxylamine hydrochloride (NH₂OH.HCl), HEPES, ascorbic acid or a mixture thereof.

According to one embodiment, the base is a strong base, preferably is an alkaline hydroxide; more preferably is sodium hydroxide (NaOH). In the present invention, the expression "strong base" means that the base is completely dissociated in an aqueous medium.

According to one embodiment, the nanoparticle stabilizing agent is a compound having a good affinity for the surface of a nanoparticle and which is able to provide a negative charge on the nanoparticle surface. According to one embodiment, the nanoparticle stabilizing agent is a compound having a good affinity for the surface of a nanoparticle and having at least one function selected from carboxylates, carboxylic acids or hydroxides; preferably the nanoparticle stabilizing agent is a citrate salt, more preferably is trisodium citrate (HOC(COONa)(CHaCOONa)₂.2H₂O).

According to one embodiment, the nanoparticle stabilizing agent is a compound having a good affinity for the surface of a nanoparticle and which is able to provide a positive charge on the nanoparticle surface.

According to one embodiment, the aqueous solvent is water.

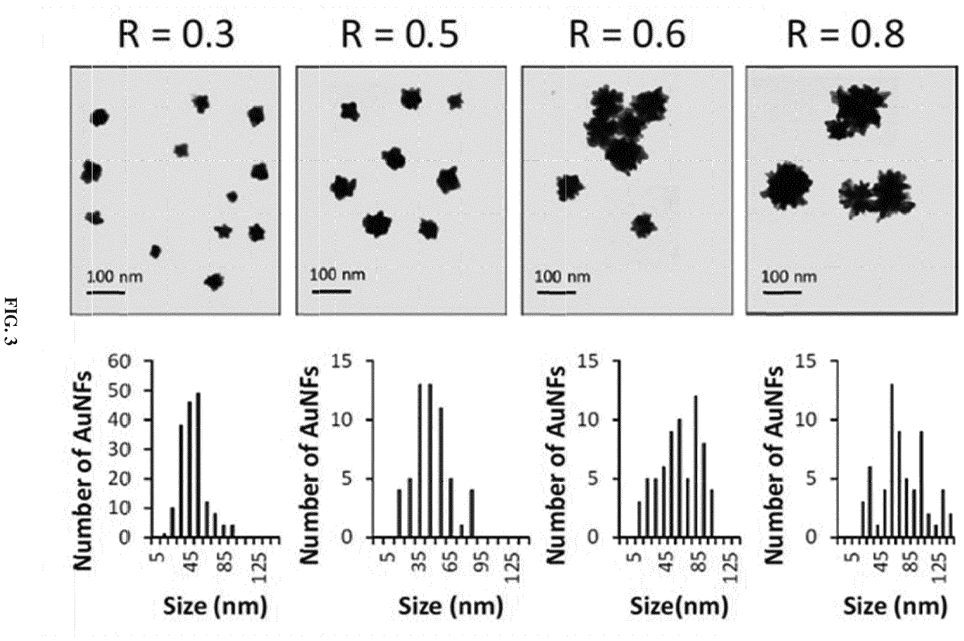

According to one embodiment, the molar ratio reducing agent/base (R) ranges from 0.1 to 0.9, from 0.1 to 0.8, or from 0.3 to 0.8. The molar ratio reducing agent/base is a key parameter for tuning the average size and the position of the LSPR band of the gold nanoflowers. Indeed, as illustrated in Figure 3, a small molar ratio reducing agent/base leads to smaller nanoparticles with less developed protrusions (or petals) and a LSPR band situated at shorter wavelengths, close to 600 nm.

When the molar ratio reducing agent/base ranges from 0.4 to 0.8, the LSPR shift is a nearly linear function of said ratio (Figure 3).

According to one embodiment, the pH of the solution prepared at step (a) ranges from 12.0 to 10.6 as a function of the molar ratio reducing agent/base. In this embodiment, higher pH is obtained with a lower molar ratio reducing agent/base.

According to one embodiment, the pH of the solution prepared at step (a) is at least 10.6, 10.7, 10.8, 10.9, 11, 11.1, 11.2, 11.3, 11.4, or 11.5.

According to one embodiment, the pH of the solution obtained at step (b), i.e. after addition of the gold precursor, ranges from 11.5 to 6.5 as a function of the molar ratio reducing agent/base. In this embodiment, higher pH is obtained with a lower molar ratio reducing agent/base.

According to one embodiment, the pH of the solution obtained at step (b) is at least 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, 9, 9.1, 9.2, 9.3, 9.4, 9.5, 9.6, 9.7, 9.8, 9.9, 10, 10.1, 10.2, 10.3, 10.4, 10.5, 10.6, 10.7, 10.8, 10.9, or 11.

When gold precursor is tetrachloroauric (III) acid, both auric acid dissociation and its reduction by the reducing agent generate H⁺ species.

According to one embodiment, step (b) is carried out for at least 0.1 second, 0.2 second, 0.3 second, 0.4 second, 0.5 second, 0.6 second, 0.7 second, 0.8 second, 0.9 second, 1 second, 1.5 seconds, 2 seconds, 2.5 seconds, 3 seconds, 3.5 seconds, 4 seconds, 4.5 seconds, 5 seconds, 5.5 seconds, 6 seconds, 6.5 seconds, 7 seconds, 7.5 seconds, 8 seconds, 8.5 seconds, 9 seconds, 9.5 seconds, 10 seconds, 10.5 seconds, 11 seconds, 11.5 seconds, 12 seconds, 12.5 seconds, 13 seconds, 13.5 seconds, 14 seconds, 14.5 seconds, 15 seconds, 15.5 seconds, 16 seconds, 16.5 seconds, 17 seconds, 17.5 seconds, 18 seconds, 18.5 seconds, 19 seconds, 19.5 seconds, 20 seconds, 21 seconds, 22 seconds, 23 seconds, 24 seconds, 25 seconds, 26 seconds, 27 seconds, 28 seconds, 29 seconds, 30 seconds, 31 seconds, 32 seconds, 33 seconds, 34 seconds, 35 seconds, 36 seconds, 37 seconds, 38 seconds, 39 seconds, 40 seconds, 41 seconds, 42 seconds, 43 seconds, 44 seconds, 45 seconds, 46 seconds, 47 seconds, 48 seconds, 49 seconds, 50 seconds, 51 seconds, 52 seconds, 53 seconds, 54 seconds, 55 seconds, 56 seconds, 57 seconds, 58 seconds, 59 seconds, 60 seconds, 1.5 min, 2 min, 2.5 min, 3 min, 3.5 min, 4 min, 4.5 min, 5 min, 5.5 min, 6 min, 6.5 min, 7 min, 7.5 min, 8 min, 8.5 min, 9 min, 9.5 min, or 10 min.

According to one embodiment, step (b) is preferably carried out for 30 seconds.

According to one embodiment, step (a) is carried out at room temperature. According to one embodiment, room temperature refers to a range of temperature from 288 K to 313 K, from 293 K to 308 K, preferably from 298 K to 303 K. According to one embodiment, step (b) is carried out at room temperature. In this embodiment, room temperature refers to a range of temperature from 292 K to 298 K.

According to one embodiment, step (b) is carried out under stirring. In this embodiment, stirring may refer to manual stirring, mechanical stirring, slow stirring, mild stirring, vigorous stirring, or any way of stirring a solution known by those skilled in the art.

According to one embodiment, after recovering step (c), the gold particles are suspended in water, or in an aqueous solvent.

According to one embodiment, the colloidal suspension comprising gold nanoparticles obtained at step (c) has a concentration in said nanoparticles of at least 0.001%, 0.002%, 0.003%, 0.004%, 0.005%, 0.006%, 0.007%, 0.008%, 0.009%, 0.01%, 0.02%, 0.03%, 0.04%, 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, or 95% by weight.

According to one embodiment, the process does not require and/or does not comprise the use of gold seeds, surfactant, metallic ions different from gold ions (e.g. silver ions) and/or organic solvent.

According to one embodiment, the process is a seed-less and surfactant free synthesis.

The possibility to avoid or to minimize the presence of surfactant on the gold surface is a potential advantage for use of the gold nanoparticles as SERS substrates, since surfactants may modify or hinder the adsorption and thus the detection of certain analytes. Surfactant-free gold surfaces are more appropriate for further functionalization with some molecules of interest.

According to one embodiment, the process does not comprise a step of gold seeds preparation.

According to one embodiment, the organic solvent includes but is not limited to: pentane, hexane, heptane, 1,2-hexanediol, 1,5-pentanediol, octane, decane, dodecane, toluene, tetrahydrofuran, chloroform, acetone, acetic acid, n-methylformamide, n,n-dimethylformamide, dimethylsulfoxide, octadecene, squalene, amines such as for example tri-n-octylamine, 1,3-diaminopropane, oleylamine, hexadecylamine, octadecylamine, squalene, alcohols such as for example ethanol, methanol, isopropanol, 1-butanol, 1-hexanol, 1-decanol, propane-2-ol, ethanediol, 1,2-propanediol, alkoxy alcohol, alkyl alcohol, alkyl benzene, alkyl benzoate, alkyl naphthalene, amyl octanoate, anisole, aryl alcohol, benzyl alcohol, butyl benzene, butyrophenon, cis-decalin, dipropylene glycol methyl ether, dodecyl benzene, mesitylene, methoxy propanol, methylbenzoate, methyl naphthalene, methyl pyrrolidinone, phenoxy ethanol, 1,3-propanediol, pyrrolidinone, trans-decalin, valerophenone, or a mixture thereof.

According to one embodiment, the process does not comprise additional washing steps, or additional purification steps, such as for example centrifugation, filtration, or dialyze.

According to one embodiment, the process may comprise an additional step of coating the surface of the gold nanoparticles with a surfactant or with an organic coating. This embodiment is particularly advantageous as said organic coating prevents: (i) oxidation, which leads to erosion of the petals and thus to a shift of the LSPR band to shorter wavelengths, (ii) aggregation of said gold nanoparticles, which would lead to the loss of colloidal stability thus to the sedimentation of the nanoparticles. These two phenomena are naturally faster for bigger nanoparticles. This organic coating is therefore useful to store big gold nanoparticles in colloid form for an extended time.

According to one embodiment, said organic coating covers partially or totally the surface of said gold nanoparticles.

According to one embodiment, said organic coating surrounds partially or totally said gold nanoparticles.

According to one embodiment, said organic coating acts as a barrier against molecular oxygen, thus against oxidation of the gold nanoparticles.

According to one embodiment, said organic coating comprises an organic material selected in the group including but not limited to: organic polymers such as for example polyvinylpyrrolidone (PVP), poloxamers, poly(ethylene glycol) (PEG), polysaccharides such as chitosan, alginate, dextran, pectin, or a mixture thereof.

According to one embodiment, the organic polymer has an average molecular weight ranging from 2 000 g/mol to 200 000 g/mol, preferably from 5 000 g/mol to 10 000 g/mol.

According to one embodiment, the gold nanoparticles are coated with an amount of organic coating configured to increase the colloidal stability of said gold nanoparticles and not to give its own signal. This embodiment is particularly advantageous as the presence of said organic coating does not weaken the SERS signal of the nanoparticles.

According to one embodiment, the coating of gold nanoparticles does not affect or degrade their plasmonic properties, or SERS activity.

According to one embodiment, nanoparticles remain colloidally stable for at least 1 day, 2 days, 3 days, 4 days, 5 days, 6 days, 7 days, 8 days, 9 days, 10 days, 11 days, 12 days, 13 days, 14 days, 15 days, 16 days, 17 days, 18 days, 19 days, 20 days, 21 days, 22 days, 23 days, 24 days, 25 days, 26 days, 27 days, 28 days, 29 days, 30 days, 1 month, 2 months, 3 months, 4 months, 5 months, 6 months, 7 months, 8 months, 9 months, 10 months, 11 months, or 12 months. According to one embodiment, nanoparticles without coating remain colloidally stable for at least 7 days to 1 month. According to one embodiment, nanoparticles with coating remain colloidally stable for at least 2 months to 12 months.

According to one embodiment, coated nanoparticles remain chemically and physically stable for at least 1 day, 2 days, 3 days, 4 days, 5 days, 6 days, 7 days, 8 days, 9 days, 10 days, 11 days, 12 days, 13 days, 14 days, 15 days, 16 days, 17 days, 18 days, 19 days, 20 days, 21 days, 22 days, 23 days, 24 days, 25 days, 26 days, 27 days, 28 days, 29 days, 30 days, 1 month, 2 months, 3 months, 4 months, 5 months, 6 months, 7 months, 8 months, 9 months, 10 months, 11 months, or 12 months.

In another aspect, this invention relates to gold nanoparticles, wherein said gold nanoparticles are obtained or obtainable by the process of the invention, said gold nanoparticles are gold nanoflowers.

According to one embodiment, gold nanoflowers are anisotropic nanoparticles, each comprising several protrusions called petals; in microscopic view resemble to flowers.

According to one embodiment, the gold nanoparticles are colloidal nanoparticles.

According to one embodiment, the gold nanoparticles are surfactant-free.

According to one embodiment, the gold nanoparticles are optically dense nanoparticles.

According to one embodiment, the gold nanoparticles have an optical density ranging from 1.2 to 2.

According to one embodiment, the gold nanoparticles are dispersible in aqueous solvents, or water.

According to one embodiment, the gold nanoparticles are hydrophilic.

According to one embodiment, the gold nanoparticles are crystalline.

According to one embodiment, the gold nanoparticles are totally crystalline.

According to one embodiment, the gold nanoparticles are partially crystalline.

According to one embodiment, the gold nanoparticles have a localized surface plasmonic resonance band centered in the deep red - near infrared range of the electromagnetic spectrum.

According to one embodiment, the gold nanoparticles have a localized surface plasmonic resonance band ranging from 540 to 900 nm, 550 to 850 nm, 600 to 850 nm, 650 to 850 nm, 700 to 850 nm, 750 to 850 nm, 550 to 825 nm, 620 to 800 nm, 650 to 800 nm, or 650 to 750 nm.

According to one embodiment, the gold nanoparticles have an average size ranging from 30 to 150 nm, from 40 to 120 nm, from 50 to 100 nm, from 50 to 90 nm, from 50 to 80 nm. According to one embodiment, the gold nanoparticles have an average size ranging from 40 to 100 nm.

According to one embodiment, the gold nanoparticles have an average size of at least 30 nm, 31 nm, 32 nm, 33 nm, 34 nm, 35 nm, 36 nm, 37 nm, 38 nm, 39 nm, 40 nm, 41 nm, 42 nm, 43 nm, 44 nm, 45 nm, 46 nm, 47 nm, 48 nm, 49 nm, 50 nm, 55 nm, 60 nm, 65 nm, 70 nm, 75 nm, 80 nm, 85 nm, 90 nm, 95 nm, 100 nm, 105 nm, 110 nm, 115 nm, 120 nm, 125 nm, 130 nm, 135 nm, 140 nm, 145 nm, or 150 nm.

According to one embodiment, the gold nanoparticles have a largest dimension of at least30 nm, 40 nm, 50 nm, 60 nm, 70 nm, 80 nm, 100 nm, 110 nm, 120 nm, 130 nm, 140 nm, or 150 nm.

According to one embodiment, the gold nanoparticles have a smallest dimension of at least 30 nm, 40 nm, 50 nm, 60 nm, 70 nm, 80 nm, 100 nm, 110 nm, 120 nm, 130 nm, 140 nm, or 150 nm.

According to one embodiment, the size distribution for the smallest dimension of a statistical set of gold nanoparticles is inferior than 1%, 2%, 3%, 4%, 5%, 6%, 7%, 8%, 9%, 10%, 15%, 20%, 25%, 30%, 35%, or 40% of said smallest dimension.

According to one embodiment, the size distribution for the largest dimension of a statistical set of gold nanoparticles is inferior than 1%, 2%, 3%, 4%, 5%, 6%, 7%, 8%, 9%, 10%, 15%, 20%, 25%, 30%, 35%, or 40% of said largest dimension.

According to one embodiment, the petals of the gold nanoparticles have a smallest dimension of at least 0.3 nm, 0.4 nm, 0.5 nm, 0.6 nm, 0.7 nm, 0.8 nm, 0.9 nm, 1.0 nm, 1.1 nm, 1.2 nm, 1.3 nm, 1.4 nm, 1.5 nm, 2 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, 10.5 nm, 11 nm, 11.5 nm, 12 nm, 12.5 nm, 13 nm, 13.5 nm, 14 nm, 14.5 nm, 15 nm, 15.5 nm, 16 nm, 16.5 nm, 17 nm, 17.5 nm, 18 nm, 18.5 nm, 19 nm, 19.5 nm, 20 nm, 21 nm, 22 nm, 23 nm, 24 nm, 25 nm, 26 nm, 27 nm, 28 nm, 29 nm, 30 nm, 31 nm, 32 nm, 33 nm, 34 nm, 35 nm, 36 nm, 37 nm, 38 nm, 39 nm, 40 nm, 41 nm, 42 nm, 43 nm, 44 nm, 45 nm, 46 nm, 47 nm, 48 nm, 49 nm, 50 nm, 55 nm, 60 nm, 65 nm, 70 nm, 75 nm, 80 nm, 85 nm, 90 nm, 95 nm, or 100 nm.

According to one embodiment, in a same gold nanoparticle, all the petals have the same size. According to one embodiment, in a same gold nanoparticle, the petals may have different sizes.

According to one embodiment, in a same gold nanoparticle, all the petals have the same morphology. According to one embodiment, in a same gold nanoparticle, the petals may have different morphologies.

According to one embodiment, the process leads to gold nanoflowers wherein the number of petals by nanoflowers are the same. According to one embodiment, the process leads to gold nanoflowers wherein the number of petals by nanoflowers are the different.

According to one embodiment, in a same gold nanoparticle, all the petals have the same smallest dimension. According to one embodiment, in a same gold nanoparticle, the petals may have different smallest dimensions. According to one embodiment, in a same gold nanoparticle, the petals have different smallest dimensions.

According to one embodiment, the petals of the gold nanoparticles have a largest dimension of at least 0.3 nm, 0.4 nm, 0.5 nm, 0.6 nm, 0.7 nm, 0.8 nm, 0.9 nm, 1.0 nm, 1.1 nm, 1.2 nm, 1.3 nm, 1.4 nm, 1.5 nm, 2 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, 10.5 nm, 11 nm, 11.5 nm, 12 nm, 12.5 nm, 13 nm, 13.5 nm, 14 nm, 14.5 nm, 15 nm, 15.5 nm, 16 nm, 16.5 nm, 17 nm, 17.5 nm, 18 nm, 18.5 nm, 19 nm, 19.5 nm, 20 nm, 21 nm, 22 nm, 23 nm, 24 nm, 25 nm, 26 nm, 27 nm, 28 nm, 29 nm, 30 nm, 31 nm, 32 nm, 33 nm, 34 nm, 35 nm, 36 nm, 37 nm, 38 nm, 39 nm, 40 nm, 41 nm, 42 nm, 43 nm, 44 nm, 45 nm, 46 nm, 47 nm, 48 nm, 49 nm, 50 nm, 55 nm, 60 nm, 65 nm, 70 nm, 75 nm, 80 nm, 85 nm, 90 nm, 95 nm, or 100 nm.

According to one embodiment, in a same gold nanoparticle, all the petals have the same largest dimension. According to one embodiment, in a same gold nanoparticle, the petals may have different largest dimensions. According to one embodiment, in a same gold nanoparticle, the petals have different largest dimensions.

According to one embodiment, the smallest dimension of the gold nanoparticle is smaller than the largest dimension of said gold nanoparticle by a factor (aspect ratio) of at least 1.5; of at least 2; at least 2.5; at least 3; at least 3.5; at least 4; at least 4.5; at least 5; at least 5.5; at least 6; at least 6.5; at least 7; at least 7.5; at least 8; at least 8.5; at least 9; at least 9.5; at least 10; at least 10.5; at least 11; at least 11.5; at least 12; at least 12.5; at least 13; at least 13.5; at least 14; at least 14.5; at least 15; at least 15.5; at least 16; at least 16.5; at least 17; at least 17.5; at least 18; at least 18.5; at least 19; at least 19.5; at least 20; at least 25; at least 30; at least 35; at least 40; at least 45; or at least 50.

According to one embodiment, in a same gold nanoparticle, the petals are all identical. According to one embodiment, in a same gold nanoparticle, the petals are different from one another.

According to one embodiment, the gold nanoparticles have a tunable LSPR band position depending on their average size, petals number and/or morphology. Indeed, bigger nanoparticles with more developed petals have a LSPR band shifted to longer wavelengths.

According to one embodiment, the gold nanoparticles are surfactant free.

According to one embodiment, the gold nanoparticles do not comprise other metallic ions or atoms other than gold, such as for example silver ions or atoms.

According to one embodiment, the gold nanoparticles are polydisperse.

According to one embodiment, the gold nanoparticles are monodisperse.

According to one embodiment, the gold nanoparticles have a narrow size distribution.

According to one embodiment illustrated in Figure 3, small gold nanoparticles have a narrower size distribution than bigger gold nanoparticles.

According to one embodiment, the gold nanoparticles have a polydispersity index ranging from 0.1 to 0.4, 0.15 to 0.3, or 0.16 to 0.25.

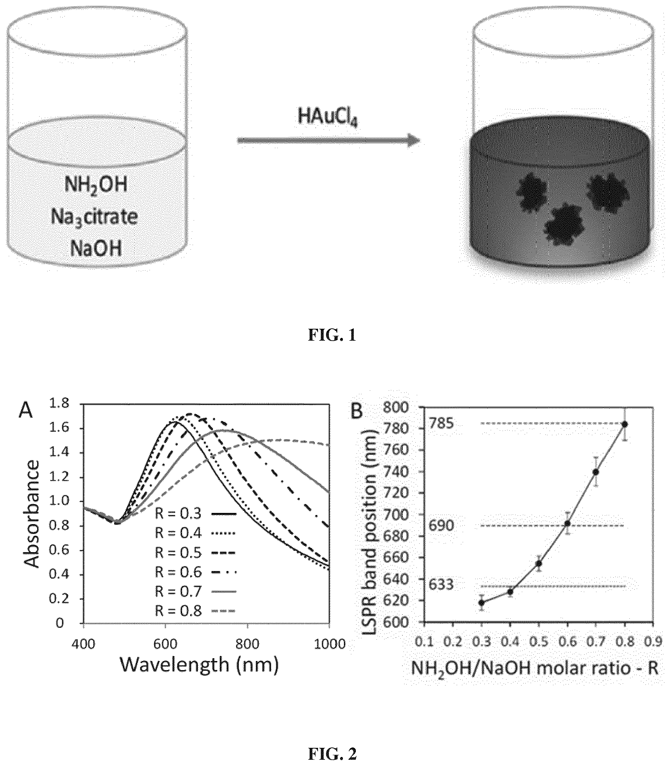

According to one embodiment illustrated in Figure 2, bigger gold nanoflowers with an increased number and/or size of the petals have a LSPR band shifted to longer wavelengths. Indeed, the coupling of plasmons of neighboring petals may be responsible for the red shift of the LSPR band. The inter-petal coupling should favor formation of "hot spots" where the SERS effect is particularly strong.

According to one embodiment, the colloidal stability of the gold nanoparticles lasts for at least 1 day, 2 days, 3 days, 4 days, 5 days, 6 days, 7 days, 8 days, 9 days, 10 days, 11 days, 12 days, 13 days, 14 days, 15 days, 16 days, 17 days, 18 days, 19 days, 20 days, 21 days, 22 days, 23 days, 24 days, 25 days, 26 days, 27 days, 28 days, 29 days, 30 days, 1 month, 2 months, 3 months, 4 months, 5 months, 6 months, 7 months, 8 months, 9 months, 10 months, 11 months, or 12 months. In this embodiment, gold nanoparticles prepared using high molar ratio reducing agent/base show more pronounced sedimentation and/or aggregation with time.

According to one embodiment, the chemical and/or physical stability of the gold nanoparticles lasts for at least 1 day, 2 days, 3 days, 4 days, 5 days, 6 days, 7 days, 8 days, 9 days, 10 days, 11 days, 12 days, 13 days, 14 days, 15 days, 16 days, 17 days, 18 days, 19 days, 20 days, 21 days, 22 days, 23 days, 24 days, 25 days, 26 days, 27 days, 28 days, 29 days, 30 days, 1 month, 2 months, 3 months, 4 months, 5 months, 6 months, 7 months, 8 months, 9 months, 10 months, 11 months, or 12 months.

According to one embodiment, the gold nanoparticles may comprise an organic coating as described hereabove, said organic coating covers partially or totally the surface of said gold nanoparticles.

According to one embodiment, the gold nanoparticles may comprise organic molecules adsorbed on their surface. In this embodiment, examples of organic molecules adsorbed on the surface of said gold nanoparticles include but are not limited to: dyes, blue dyes such as for example Crystal Violet, Nile Blue, red dyes such as for example rhodamine, polymers, drugs, biological ligands, or a mixture thereof.

According to one embodiment, the gold nanoparticles are not aggregated.

### APPLICATIONS

In another aspect, this invention relates to the use of gold nanoparticles of the invention as substrates for surface-enhanced Raman scattering spectroscopy, or applications using SERS effect.

The resonance between the wavelength of the laser source and the LSPR band of the gold nanoparticles of the invention ensures a strong photon-particle interaction that results in the strong amplification of the electromagnetic field near the surface of said gold nanoparticles. The electrical component of the electromagnetic field is capable of causing the SERS effect (average exaltation factor of 10⁶ times) for the organic chromophores found at said surface. Thus, gold nanoparticles of the invention can serve as an exhilarating substrate for SERS-based techniques such as optical spectroscopy, microscopy and optical diagnostics.

Gold nanoflowers have an anisotropic structure allowing unique optical properties. Indeed, gold nanoflowers allow to shift LSPR band in the field of the optical window of the biological tissues ranging from 540 to 1200 nm. According to one embodiment, gold nanoflowers allow to shift LSPR band in the field of the optical window of the biological tissues ranging from 560 to 900 nm. The beginning of this range, from 620 and 800 nm, is particularly interesting, because it represents a compromise between the weak photon-photon interaction and the good performance of CCD detectors. In addition, several laser sources widely used for biophotonics applications emit in this range, such as for example at 633, 690 or 785 nm, thus gold nanoflowers of the invention are particularly suited for applications using light sources emitting in the 620-800 nm range.

According to one embodiment, the gold nanoparticles of the invention are used in optical spectroscopy, optical microscopy, optical diagnostic, biomedical diagnostic, or imaging microscopy.

According to one embodiment, the gold nanoparticles of the invention are used in biosensing applications.

According to one embodiment, the gold nanoparticles of the invention are used substrated for SPR (surface placement resonance) technique.

According to one embodiment, the gold nanoparticles of the invention are used with detectors < 900 nm.

According to one embodiment, the gold nanoparticles of the invention are used in biophotonics.

According to one embodiment, the gold nanoparticles of the invention are used in hyperthermia or photothermal applications such as for example hyperthermia or photothermal therapy, wherein said gold nanoparticles are used as agents for photoinduced heating. Indeed, the exposure of said gold nanoparticles to absorbed photons can be used to produce a photothermal effect, i.e. convert incident light into heat, that may be useful for example to kill pathological cells by exposing said gold nanoparticles to incident light between 620 and 800 nm.

According to one embodiment, the gold nanoparticles of the invention are used as optical filters.

According to one embodiment, the gold nanoparticles of the invention are as an analytical detection reagent.

While various embodiments have been described and illustrated, the detailed description is not to be construed as being limited hereto. Various modifications can be made to the embodiments by those skilled in the art without departing from the true spirit and scope of the disclosure as defined by the claims.

### BRIEF DESCRIPTION OF THE DRAWINGS

**Figure 1** is a schematic description of the process of the invention.
**Figure 2A** illustrates UV-vis spectra of gold nanoparticles manufactured by the process of the invention using different molar ratio reducing agent/base.
**Figure 2B** illustrates the LSPR band position of gold nanoparticles manufactured by the process of the invention depending on the molar ratio reducing agent/base.
**Figure 3** illustrates TEM images of gold nanoparticles depending on molar ratio reducing agent/base, and the corresponding size distribution histograms.
**Figure 4A** illustrates UV-vis spectra of gold nanoparticles manufactured by the process of the invention (R=0.6): as-prepared (black curve) and 12 hours after being incubated with PVP (gray curve).
**Figure 4B** illustrates UV-vis spectra of gold nanoparticles manufactured by the process of the invention (R=0.3): as-prepared (black curve) and 12 hours after being incubated with PVP (gray curve).
**Figure 5** illustrates the SERRS spectra obtained for Crystal Violet (CV) dye and Nile Blue (NB) absorbed on gold nanoparticles of the invention (R=0.6). Each spectrum is an average of 16 scans of 1 second.

### EXAMPLES

The present invention is further illustrated by the following examples.

### Abbreviations

°C: Celsius degree,
Cu: copper,
DLS: Dynamic Light Scattering,
D_{H}: mean hydrodynamic diameter,
He: helium,
kV: kilovolt(s),
LSPR band: Localized surface plasmonic resonance band,
M: mol per liter,
mL: milliliter(s),
mW: milliWatt(s),
Ne: neon,
Nm: nanometer(s),
R: molar ratio between the reducing agent and the base,
TEM: transmission electron microscopy,
UV: ultraviolet,
Vis: visible.

### Example 1: Gold nanoflowers preparation

### Materials and Methods

### Material

- hydroxylamine hydrochloride (NH₂OH.HCl),
- trisodium citrate (HOC(COONa)(CH₂COONa)₂.2H₂O),
- sodium hydroxide (NaOH),
- tetrachloroauric(III) acid (HAuCl₄.3H₂O),
- ultrapure water (milli-Q) was used for the preparation of all solutions.

All the reagents were used without further purification.

UV - visible absorption spectra were acquired using a UV - vis spectrophotometer. TEM experiments were carried out on a transmission electron microscope operating at an acceleration voltage of 100 kV. Gold nanoparticles were deposited on carbon-coated Cu grids from the aqueous suspension. Excess water was removed by filter paper. The obtained samples were left to dry under ambient air. The mean hydrodynamic diameter D_{H} values (z-average) were measured using dynamic light scattering (DLS), at 25°C and with a He-Ne laser (4 mW, 633 nm, scatter angle 173°). Each measurement was done in triplicate.

### Methods

Gold nanoflowers synthesis was carried out as follows: to 20 mL of water under stirring, aqueous solutions of hydroxylamine (0.1 M, volumes 0.3, 0.4, 0.45, 0.54, 0.56 or 0.64 mL), trisodium citrate (0.1 M, 1.0 mL) and sodium hydroxide (0.01 M, volumes 1.0, 1.0, 0.9, 0.9, 0.8 or 0.8 mL) were added. Upon addition of an aqueous solution of HAuCl₄ (0.01 M, 1.0 mL), the initial colorless solution immediately turned dark blue. The resultant colloid was stirred for approximatively 30 seconds at room temperature and transferred to a hermetically closed tube. Figure 1 is a schematic description of the process of the invention.

The volumes of hydroxylamine and sodium hydroxide are varied in order to adjust the NH₂OH/NaOH molar ratio (hereafter called R) to the values of 0.3, 0.4, 0.5, 0.6, 0.7, or 0.8.

### Results

Figure 3 shows TEM images of as-prepared gold nanoparticles having a flowerlike shape.

An increase of the ratio R from 0.3 to 0.8 leads to a red shift of the LSPR band from 620 to 800 nm (Figure 2). Between 0.4 and 0.8, the LSPR shift is a nearly linear function of R (Figure 2B). As Figure 2 shows, it is possible to adjust the LSPR band position to any of three wavelengths of the laser sources most widely used in bioanalytical spectroscopy: 633 nm (R=0.4), 690 nm (R=0.6) and 785 nm (R=0.8). The maximum absorbance for these LSPR bands corresponds to a molar ratio R between 1.4 and 1.7.

As seen from the TEM images and the histograms in Figure 3, the size distribution was narrower in the populations of smaller gold nanoparticles. The center of mass of the histograms corresponds to the size of 49, 56, 75 and 89 nm for R values of 0.3, 0.5, 0.6 and 0.8, respectively. The hydrodynamic diameter DH (z-average data from DLS), which includes the hydration layers around gold nanoparticles, increases from 84 nm to 112 nm. The polydispersity index (PDI) values ranges from 0.16 to 0.24.

### Example 2: Organic coating

### Materials and Methods

### Material

- polyvinylpyrrolidone (PVP, Mw 7,000 - 11,000),
- as-prepared gold nanoparticles.

All the reagents were used without further purification.

### Methods

0.25 mL of PVP aqueous solution (final concentration 13.5 µM) were added to a suspension of gold nanoparticles as-prepared in the first example.

### Results

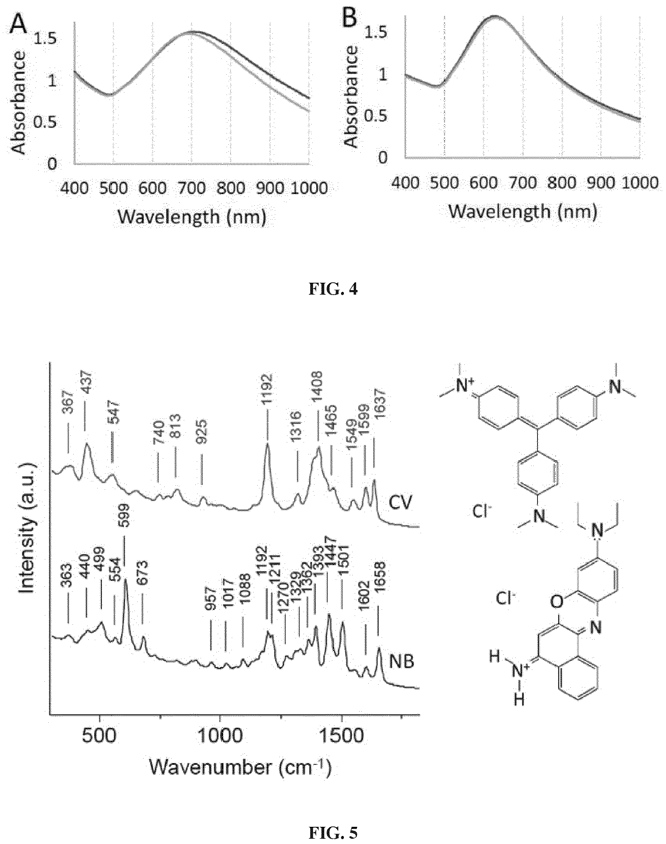

The gold nanoparticles were successfully stabilized for at least a month by post-synthesis addition of PVP as organic coating. As shown in Figure 4A, it reduces the absorbance at the long-wavelength side of LSPR band thus making it more symmetrical, presumably due to re-dispersion of some aggregates.

The effect of PVP on the LSPR band shape is more significant for the bigger gold nanoparticles at nearly neutral pH (absorption maximum around 690 nm and above, Figure 4A) while it has almost no effect for the smaller nanoparticles.

### Example 3: SERS experiment

### Materials and Methods

### Material

- Crystal Violet,
- Nile Blue A,
- as-prepared citrate-stabilized gold nanoparticles.

All the reagents were used without further purification.

SERS spectra were recorded with a confocal Raman micro spectrometer equipped with an EM CCD air-cooled detector, a 690 nm laser source providing 26.9 mW on the sample. The spectra were collected via a 10x objective focused on the top of the sample solution (200 µL) placed in a well of a P96 multiwell plate.

### Methods

A 10-fold dilution of the analyte solution (Crystal Violet or Nile Blue) in the as-prepared coated gold nanoparticles suspension was placed into a well of a 96-multiwell plate.

### Results

Figure 5 illustrated the resonance SERS (SERRS) spectra of the two blue dyes, Nile Blue and Crystal Violet (absorption maxima in water at 635 and 590 nm, respectively).

The surface of the gold nanoparticles, presumably coated with a stabilizing layer of citrate anions, is easily accessible to the adsorption of molecules.

The selected chromophores are void of thiol groups and therefore have much lower affinity to the gold surface than rhodamine and thiolated dyes often used in the literature, showing the great efficiency of the as-prepared gold nanoparticles as SERS substrates.

## Claims

1. A process for manufacturing gold nanoparticles comprising the following steps:
a) preparing a solution by mixing at least one reducing agent, at least one base and at least one nanoparticle stabilizing agent in an aqueous solvent,
b) adding at least one gold precursor to the solution obtained at step (a), and
c) recovering gold nanoparticles,
wherein said gold nanoparticles are gold nanoflowers.

2. The process for manufacturing gold nanoparticles according to claim 1, wherein said step (b) is carried out at room temperature.

3. The process for manufacturing gold nanoparticles according to any one of claim **1** or **2,** wherein the gold precursor is tetrachloroauric acid.

4. The process for manufacturing gold nanoparticles according to any one of claims **1** to **3,** wherein the reducing agent is hydroxylamine.

5. The process for manufacturing gold nanoparticles according to any one of claims **1** to **4,** wherein the base is sodium hydroxide.

6. The process for manufacturing gold nanoparticles according to any one of claims **1** to **5,** wherein the nanoparticle stabilizing agent is citrate salt, more preferably is trisodium citrate.

7. The process for manufacturing gold nanoparticles according to any one of claims **1** to **6,** wherein the molar ratio reducing agent/base ranges from 0.1 to 0.9, preferably from 0.1 to 0.8, more preferably from 0.3 to 0.8.

8. The process for manufacturing gold nanoparticles according to any one of claims **1** to **7,** wherein the gold nanoflowers have a localized surface plasmonic resonance band ranging from 560 to 900 nm.

9. The process for manufacturing gold nanoparticles according to any one of claims **1** to **8,** wherein the gold nanoflowers have an average size ranging from 50 to 120 nm.

10. Gold nanoparticles obtained or obtainable by the process according to any one of claims **1** to **9,** wherein said gold nanoparticles are gold nanoflowers.

11. Gold nanoparticles according to claim **10,** wherein said gold nanoparticles have a localized surface plasmonic resonance band ranging from 560 to 900 nm.

12. Gold nanoparticles according to any one of claim **10** or **11,** wherein said gold nanoparticles have an average size ranging from 50 to 120 nm.

13. Use of gold nanoparticles according to any one of claims **10** to **12** as substrates for surface-enhanced Raman scattering spectroscopy, applications using SERS effect, or SPR technique.

14. Use of gold nanoparticles according to claim **13** in optical spectroscopy, optical microscopy, optical diagnostic, biomedical diagnostic, or imaging microscopy.

15. Use of gold nanoparticles according to any one of claims **10** to **12** in hyperthermia or photothermal applications.
